# EUROPEAN PATENT APPLICATION

(11) **EP 2 323 353 A1**
(43) Date of publication of application: **18.05.2011**
(21) Application number: 10003928.8
(22) Date of filing: 14.04.2010
(51) Int. Cl.: H04M 1/23, H01H 13/70

(54) **Side key module for mobile communication terminal**

(30) Priority: 17.11.2009 KR 20090110842
(71) Applicant: Hanbit Precision Co., Ltd., Uiwang-si, Gyeonggi-do (KR)
(72) Inventor: Lee, Geun Ju, Gangnam-gu Seoul 135-506 (KR)
(74) Representative: Munk, Ludwig Hubert

(57) **Abstract**

A side key module for a mobile communication terminal is provided between side keys mounted on a side surface of the mobile communication terminal and an internal printed circuit board. The side key module includes a PCB which is in the shape of an elongated plate and on which a conductive material pattern is formed, a contact terminal having one side which is in contact with the pattern and the other side which is in contact with the internal printed circuit board, and a metal dome which is coupled to one side of the PCB and is in contact with the pattern to electrically connect the pattern to the contact terminal when the side key is pressed.

## Description

This application is based on and claims priority from Korean Patent Application No. 10-2009-110842, filed on November 17, 2009 in the Korean Intellectual Property Office, the disclosure of which is incorporated herein in its entirety by reference.

### BACKGROUND OF THE INVENTION

### Field of the invention

The present invention relates to a side key module for a mobile communication terminal. More particularly, the present invention relates to a side key module for a mobile communication terminal which can simplify the whole component construction by a PCB on which a pattern of a conductive material is formed and which can facilitate mass production.

### Description of the Prior Art

A mobile communication terminal means a device which is carried by a user and enables a user to perform wireless communication with an opposite party. Such a mobile communication terminal is classified into a bar type, a flip type, a folder type, a slide type, and a swing type in accordance with its external shape and operation state.

The mobile communication terminal is provided with side keys which is installed on a side surface of a main body of the mobile communication terminal in addition to a keypad which is mounted to be exposed from the front surface of the main body of the mobile communication terminal so that a user can manipulate a camera installed in the mobile communication terminal or adjust various kinds of volumes.

A conventional side key module has a structure in which a plurality of plates is in contact with a printed circuit board and a main body is provided to accommodate such plates. Accordingly, the conventional side key module requires many components which should be separately produced.

Also, since the conventional side key module is manufactured by assembling the respective produced components, the assemblability is degraded.

### SUMMARY OF THE INVENTION

Accordingly, the present invention has been made to solve the above-mentioned problems occurring in the prior art while advantages achieved by the prior art are maintained intact.

An embodiment of the present invention relates to a side key module for a mobile communication terminal which simplifies the whole component construction by a PCB on which a pattern of a conductive material is formed and which facilitates mass production.

In one aspect of the present invention, there is provided a side key module for a mobile communication terminal that is provided between side keys mounted on a side surface of the mobile communication terminal and an internal printed circuit board, which includes a PCB which is in the shape of an elongated plate and on which a conductive material pattern is formed; a contact terminal having one side which is in contact with the pattern and the other side which is in contact with the internal printed circuit board; and a metal dome which is coupled to one side of the PCB and is in contact with the pattern to electrically connect the pattern to the contact terminal when the side key is pressed.

The side key module according to an embodiment of the present invention has the following advantages.

First, a PCB on which a conductive material pattern is formed can serve as a plurality of plates and a main body, and thus the components of the side key module can be simplified.

Second, since contact is made by the pattern formed on the PCB, a disconnection phenomenon due to an impact can be prevented.

Third, since the components are simplified, mass production is facilitated, and the assemblability of the mass-produced components is improved.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view of a side key module for a mobile communication terminal according to an embodiment of the present invention;
FIG. 2 is an exploded perspective view of a side key module for a mobile communication terminal as illustrated in FIG. 1;
FIG. 3 is an exploded perspective view of a side key module for a mobile communication terminal according to another embodiment of the present invention; and
FIG. 4 is an exploded perspective view of a side key module for a mobile communication terminal as illustrated in FIG. 3.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto. In the drawings, sizes and relative sizes of layers and areas may be exaggerated for clarity in explanation.

All terms used in the description could be used as meanings commonly understood by those ordinary skilled in the art to which the present invention belongs. In addition, terms that are generally used but are not defined in the dictionary are not interpreted ideally or excessively unless they have been clearly and specially defined.

In addition, the present invention is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims.

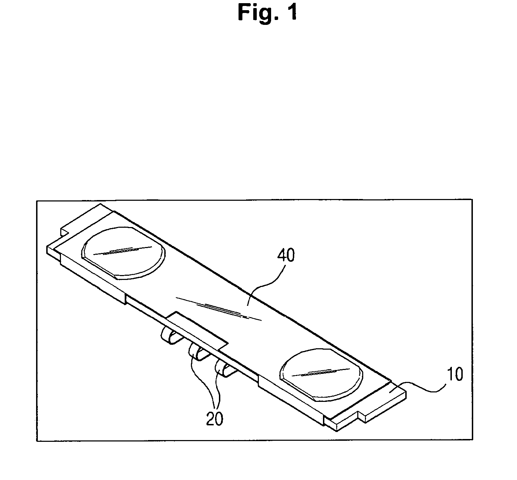

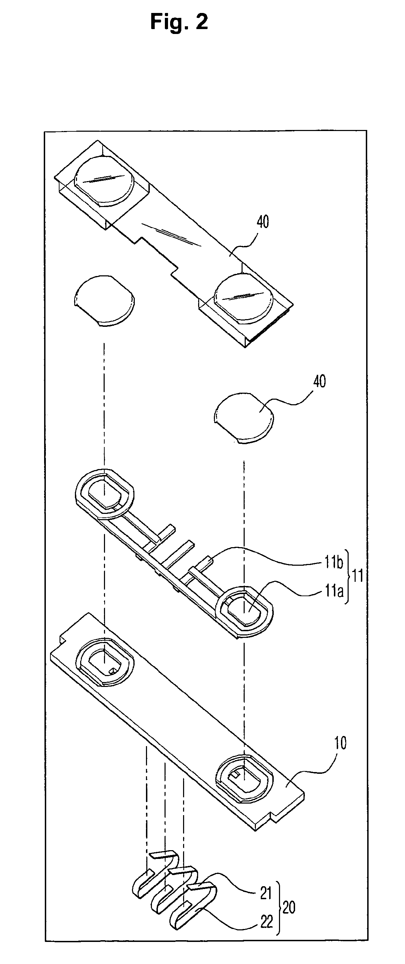

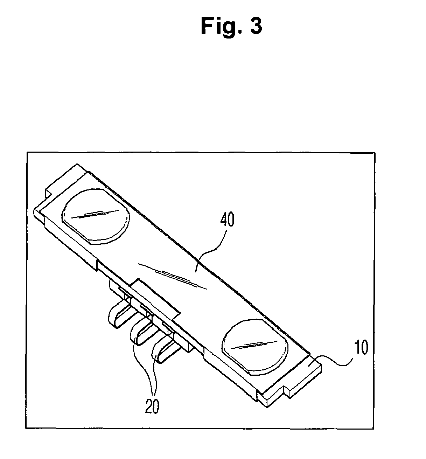

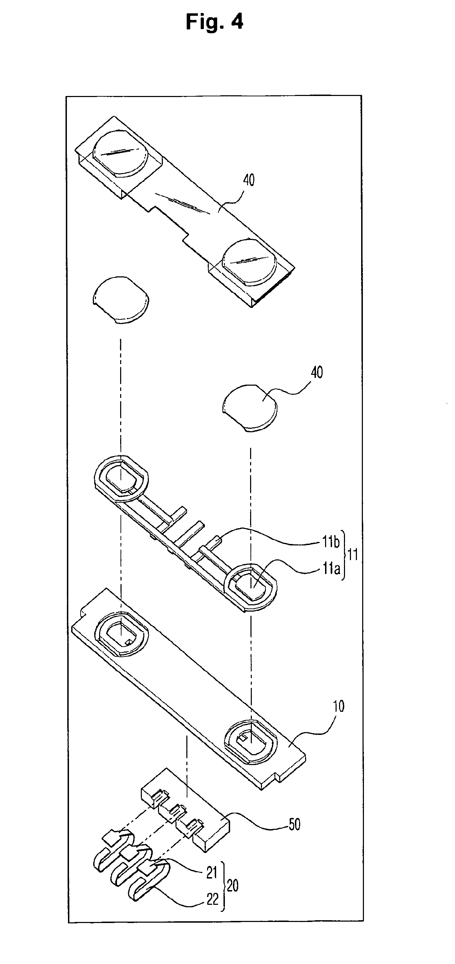

FIG. 1 is a perspective view of a side key module for a mobile communication terminal according to an embodiment of the present invention, and FIG. 2 is an exploded perspective view of a side key module for a mobile communication terminal as illustrated in FIG. 1. FIG. 3 is an exploded perspective view of a side key module for a mobile communication terminal according to another embodiment of the present invention, and FIG. 4 is an exploded perspective view of a side key module for a mobile communication terminal as illustrated in FIG. 3.

A side key module for a mobile communication terminal according to a preferred embodiment of the present invention is provided between side keys mounted on a side surface of the mobile communication terminal and an internal printed circuit board, and includes a PCB 10 which is in the shape of an elongated plate and on which a conductive material pattern 11 is formed; a contact terminal 20 having one side which is in contact with the pattern 11 and the other side which is in contact with the internal printed circuit board; and a metal dome 30 which is coupled to one side of the PCB 10 and is in contact with the pattern 11 to electrically connect the pattern 11 to the contact terminal 20 when the side key is pressed.

The side key module for a mobile communication terminal is installed between side keys of the mobile communication terminal and an internal printed circuit board of the mobile communication terminal, and if a user presses the side key, it serves to send a key signal to the internal printed circuit board.

The side key module includes a PCB 10, a contact terminal 20, and a metal dome 30.

As illustrated in FIG. 2, the PCB 10 is in the shape of an elongated plate, and on the PCB 10, a specified pattern 11 is formed. Since the pattern 11 is formed of a conductive material, a signal is transferred through the pattern 11.

As illustrated in FIG. 2, the contact terminal 20 is formed to be in contact with the pattern 11 and the internal printed circuit board, and preferably has bent portions.

On both sides of one end of the PCB 10, stepped portions may be formed. The stepped portions are formed to guide an assembling direction when the side key module is assembled in the mobile communication terminal, and thus reverse insertion is prevented when the side keys are assembled.

The metal dome 30 is coupled to one side of the PCB 10. When the side key is pressed in a direction of the internal printed circuit board, the side key is deformed in the direction to be in contact with the pattern 11, and thus the pattern 11 and the contact terminal 20 become in electrical contact with each other. The metal dome 30 is elastically deformed, and if the pressure being applied to the side key is vanished, it is restored to its original state to cause the side key also to be restored to its original state.

The metal dome 30 may be formed in diverse shapes. It is preferable that the metal dome 30 is in the form of a hemisphere so as to maintain its restoring force even if the pressure is repeatedly applied to the side key.

The side key is mounted on a side surface of the mobile communication terminal, the internal printed circuit board is installed in the mobile communication terminal, and the side key module is interposed between the side key and the internal printed circuit board.

In the preferred embodiment of the present invention, the side key module for a mobile communication terminal further includes a contact terminal housing in which the contact terminal 20 is inserted and safely placed.

As illustrated in FIG. 4, the contact terminal housing 50 is provided to protect the contact terminal 20. On the contact terminal housing 50, an insertion groove is formed to correspond to the contact terminal 20 so that the contact terminal 20 can be accurately inserted and safely placed in the contact terminal housing 50.

If the contact terminal housing 50, in which the contact terminal 20 is inserted, is positioned on one side surface of the PCB 10, the contact terminal 20 becomes in contact with the pattern 11. In this state, the contact terminal housing 50 firmly supports the contact terminal 20, and thus disconnection can be prevented even if an impact is applied to the mobile communication terminal.

The side key module for a mobile communication terminal according to the preferred embodiment of the present invention further includes a top tape 40 that protects the metal dome 30 and the PCB 10.

As illustrated in FIGs. 2 and 4, it is possible to provide the top tape 40 for protecting the metal dome 30 and the PCB 10. The top tape 40, which prevents foreign substances from permeating into the PCB 10, is fixed to a predetermined position, and thus the signal can be accurately transferred when the side key is pressed.

In the side key module for a mobile communication terminal according to the preferred embodiment of the present invention, the pattern 11 has a shape corresponding to the metal dome 30, and includes a first pattern 11a which is in contact with the metal dome 30, and a second pattern 11b which has a shape corresponding to the contact terminal 20 and is in contact with the contact terminal 20.

As illustrated in FIGs. 2 and 4, the pattern 11 is composed of the first pattern 11a and the second pattern 11b.

The first pattern 11a is a portion which is in contact with the metal dome 30 and has a shape corresponding to the metal dome 30, and is composed of an edge portion and a center portion. The metal dome 30 is in contact with the edge portion of the first pattern 11a, and is in partial contact with the center portion of the first pattern 11a. If the metal dome 30 moves in a direction of the internal printed circuit board, the center portion of the metal dome 30 becomes in contact with the center portion of the first pattern 11a to make the pattern 11 and the contact terminal 20 be electrically connected with each other.

The second pattern 12a is a portion which is in contact with the contact terminal 20, and is in the shape of forks corresponding to the contact terminal 20.

In the side key module for a mobile communication terminal according to the preferred embodiment of the present invention, the contact terminal 20 includes a first bent portion 21 that is in contact with the second pattern 11b, and a second bent portion 22 that is in contact with the internal printed circuit board.

As illustrated in FIGs. 2 and 4, the contact terminal 20 is composed of the first bent portion 21 and the second bent portion 22.

The first bent portion 21 is a portion which is in contact with the second pattern 11b that is formed on the PCB 10, and is bent in a direction of the second pattern 11b.

The second bent portion 22 is a portion excluding the first bent portion 21, and is in contact with the internal printed circuit board.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A side key module for a mobile communication terminal that is provided between side keys mounted on a side surface of the mobile communication terminal and an internal printed circuit board, the side key module comprising:
a PCB which is in the shape of an elongated plate and on which a conductive material pattern is formed;
a contact terminal having one side which is in contact with the pattern and the other side which is in contact with the internal printed circuit board; and
a metal dome which is coupled to one side of the PCB, and is in contact with the pattern to electrically connect the pattern with the contact terminal when the side key is pressed.

2. The side key module according to claim 1, further comprising a contact terminal housing in which the contact terminal is inserted and safely placed.

3. The side key module according to claim 1 or 2, further comprising a top tape that protects the metal dome and the PCB.

4. The side key module according to claim 3, wherein the pattern comprises:
a first pattern which has a shape corresponding to the metal dome and is in contact with the metal dome: and
a second pattern which has a shape corresponding to the contact terminal, and is in contact with the contact terminal.

5. The side key module according to claim 4, wherein the contact terminal comprises:
a first bent portion which is in contact with the second pattern; and
a second bent portion which is in contact with the internal printed circuit board.
